# EUROPEAN PATENT APPLICATION

(11) **EP 1 863 275 A1**
(43) Date of publication of application: **05.12.2007**
(21) Application number: 07010632.3
(22) Date of filing: 29.05.2007
(51) Int. Cl.: H04N 5/44

(54) **Remote control device and remote control system**

(30) Priority: 29.05.2006 JP 2006148670
(71) Applicant: Funai Electric Co., Ltd., Daito-shi, Osaka 574-0031 (JP)
(72) Inventor: Nishigaki, Hiroshi, Osaka 574-0013 (JP)
(74) Representative: Grünecker, Kinkeldey, Stockmair & Schwanhäusser Anwaltssozietät

(57) **Abstract**

In each of remote control devices (10A, 10B and 10C) making mutual communications, a viewing station detector (11A) detects a viewing station that is a TV station currently tuned in a device controlled by the remote control device in question, and provides a viewing station information. The remote control device (10A) receives the current viewing station information from the remote control devices (10B and 10C), and compiles the received information together with its own current viewing station information. A rating calculator (22) calculates the rating of the TV station based on the compiled information, and a display (15) displays the result of the calculation.

## Description

### BACKGROUND OF THE INVENTION

### Field of the Invention

The present invention relates to a remote control device and a remote control system, and particularly to a remote control device having a function of processing viewing information as well as a remote control system using the remote control device.

### Description of the Background Art

Such a function is not yet provided that allows audiences or viewers of TV (i.e., television) program to know ratings (i.e., TV or program ratings) in real time.

In addition to the manner of viewing TV programs through television receivers, there are several manners of viewing the TV programs. For example, the program can be viewed through recorders internally provided with a television tuner, and can also be viewed after recording the programs. Therefore, it has been difficult to calculate collectively the ratings. Further, such functions are not yet provided that determines groups belonging to a specific population, and allows users to check the ratings of the groups in question. However, several techniques have been proposed in view of these matters.

Japanese Patent Laying-Open No. 2002-171578 has disclosed a remote control connectable to the Internet. A system employing this remote control compiles ratings in a data collecting center. This system provides rating data in real time, and distributes advertising contents based on an analysis result. This system also provides a function of periodically collecting data about programmed or unattended recording, and thereby summarizing the ratings of programs recorded by unattended recording.

Japanese Patent Laying-Open No. 2002-135810 has disclosed a portable terminal having a cellular phone function and a remote control function in an integrated fashion. Information about viewing programs are stored according to details of operations of the portable terminal, and a research firm automatically or manually collects the stored information to perform the ratings research. In this Japanese Patent Laying-Open No, 2002-135810, the portable terminal also has a function of performing personal identification based on a voice, fingerprint, iris or password.

Japanese Patent Laying-Open No. 2002-135862 has disclosed a remote control having a function of Internet communications. A user's identification is performed based on a face, voice, fingerprint or password entry. Ratings can be obtained by collecting history information of a plurality of users.

According to the disclosures of these patent publications, each remote control collects the viewing information about programs that were viewed or recorded by the unattended recording, and a center receives the viewing information received from the respective remote controls, and analyzes it to calculate the rating. Also, it has been disclosed that the viewing information relating to each user profile is collected and analyzed.

In these patent publications, the viewing information is collectively compiled in the external center. Therefore, the center for the special purpose is required, resulting in a high cost.

### SUMMARY OF THE INVENTION

An object of the invention is to provide a remote controller and a remote control system that calculate ratings based on collected viewing information, and thereby can provide the viewing information to users in real time.

Another object of the invention is to provide a remote controller and a remote control system that can collect viewing information by performing mutual communications between remote controllers, can calculate the ratings, and thereby can provide the viewing information to users in real time.

For achieving the above object, a remote control system according to an aspect of the invention is configured to perform mutual communications between a plurality of remote controllers transmitting a control signal to a device internally provided with a television tuner and thereby to control operations of the device including selection of a TV station for program reception, and has the following structures.

Each of the plurality of remote controllers includes a viewing station detector detecting a viewing station being the TV station currently selected by the device controlled by the remote controller, and providing viewing station information; a display; and a rating display portion displaying, on the display, a rating of each TV station calculated based on compiled information prepared by compiling the viewing station information.

A predetermined remote controller among the plurality of remote controllers includes a viewing information receiver receiving from the different remote controller the viewing station information provided from the viewing station detector of the different remote controller; and a compiling portion producing the compiled information by compiling, for each of the TV stations, the viewing station information received by the viewing information receiver and the viewing station information provided from a current viewing station detector of the predetermined remote controller.

Preferably, the different remote controller includes a first calculator receiving the compiled information transmitted from the predetermined remote controller and calculating the rating for each of the TV stations based on the received compiled information, and displays the rating of each of the TV stations calculated by the first calculator on the display by the rating display portion.

Preferably, the predetermined remote controller further includes a compiled information transmitter transmitting the compiled information produced by the compiling portion to the different remote controller at predetermined time intervals. The compiling portion starts new compiling of the viewing station information upon every start of the predetermined time interval.

Preferably, the predetermined remote controller transmits the compiled information produced by the compiling portion to the different remote controller of a requester in response to reception of a request from the different remote controller of the requester.

Preferably, the rating is calculated for a preindicated TV station.

Preferably, the viewing station information includes personal information of a viewer operating the remote controller, and the compiling portion produces the compiled information compiled corresponding to each of the TV stations for each of groups classified based on the personal information.

Preferably, the rating is calculated based on the compiled information of the group of a preindicated type.

Preferably, the device has a record function of recording a program broadcasted by the currently selected TV station. When the program is being recorded by the record function, the viewing station detected by the viewing station detector is the TV station broadcasting the recording program.

Preferably, each of the plurality of remote controllers further includes an authenticating portion authenticating a personal identification of an operator and determining based on a result of the authentication whether an operation of the remote controller in question is to be allowed or not.

Preferably, the different remote controller transmits the viewing station information to the predetermined remote controller when the authenticating portion authenticates the personal identification of the operator.

Preferably, each of the plurality of remote controllers further includes a selector transmitting an instruction for the selection to the device to receive the broadcast signal of the TV station achieving a calculated rating larger than a predetermined value.

According to another aspect of the invention, a remote controller is configured to transmit a control signal to a device internally provided with a television tuner and thereby to control operations of the device including selection of a TV station for program reception, and has the following structures. The remote controller includes a viewing station detector detecting a viewing station being the TV station currently selected by the device, and providing viewing station information; a display; a compiling portion producing compiled information by compiling, for each of the TV stations, the viewing station information received by the viewing information receiver and the viewing station information received from a different remote controller; a calculator calculating a rating for each of the TV stations based on the compiled information; and a rating display portion displaying, on the display, the rating calculated by the calculator.

Preferably, the rating is calculated for a preindicated TV station.

Preferably, the viewing station information includes personal information of a viewer operating the remote controller, and the compiling portion produces the compiled information compiled corresponding to each of the TV stations for each of groups classified based on the personal information.

Preferably, the rating is calculated based on the compiled information of the group of a preindicated type.

Preferably, the device has a record function of recording a program broadcasted by the currently selected TV station. When the program is being recorded by the record function, the viewing station detected by the viewing station detector is the TV station broadcasting the recording program.

Preferably, the remote controller further includes an authenticating portion authenticating a personal identification of an operator and determining based on a result of the authentication whether an operation of the remote controller in question is to be allowed or not.

Preferably, the remote controller further includes a selector transmitting an instruction for the selection to the device to receive the broadcast signal of the TV station achieving a calculated rating larger than a predetermined value.

According to the invention, the remote controller internally provided with the television tuner detects the viewing stations that are the TV stations currently tuned by the remote controller and the different remote controllers, compiles the viewing information provided from the detected viewing stations, calculates the ratings for each of the TV stations based on the compiled information and displays the calculated ratings.

Therefore, it is possible to provide the ratings, i.e., the current viewing information to the user in real time.

Since the remote controllers makes mutual communications to collect the viewing information and calculate the ratings, any one of the remote controllers connected for the communications can provide the viewing information to the user in real time.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 illustrates a functional structure of a remote control device according to an embodiment of the invention.
Fig. 2 shows an outer appearance of the remote control device according to the embodiment of the invention.
Fig. 3 schematically shows a system formed of the remote control devices and controlled devices according to the embodiment of the invention.
Figs. 4A and 4B illustrate a network structure according to the embodiment of the invention.
Fig. 5 illustrates a hardware structure of the remote control device according to the embodiment of the invention.
Figs. 6A and 6B illustrate examples of storage contents according to a first embodiment of the invention.
Fig. 7 illustrates station correlation information according to the embodiment of the invention.
Fig. 8 illustrates current viewing station information according to the embodiment of the invention.
Fig. 9 illustrates current recording station information according to the embodiment of the invention.
Fig. 10 illustrates compiled information according to the embodiment of the invention.
Figs. 11 to 13 are processing flowcharts according to the first embodiment of the invention.
Figs. 14A and 14B illustrate data formats according to the first embodiment of the invention.
Fig. 15 shows an example of display according to the first embodiment of the invention.
Figs. 16A and 16B illustrate an example of storage contents according to a second embodiment of the invention.
Fig. 17 illustrates compiled information according to the second embodiment of the invention.
Fig. 18 is a processing flowchart according to the second embodiment of the invention.
Figs. 19A and 19B illustrate data formats according to the second embodiment of the invention.
Fig. 20 shows an example of display according to the second embodiment of the invention.

### DESCRIPTION OF THE PREFERRED EMBODIMENTS

Embodiments of the invention will now be described with reference to the drawings. In the following description and drawings, the same or corresponding portions bear the same reference numbers.

### (First Embodiment)

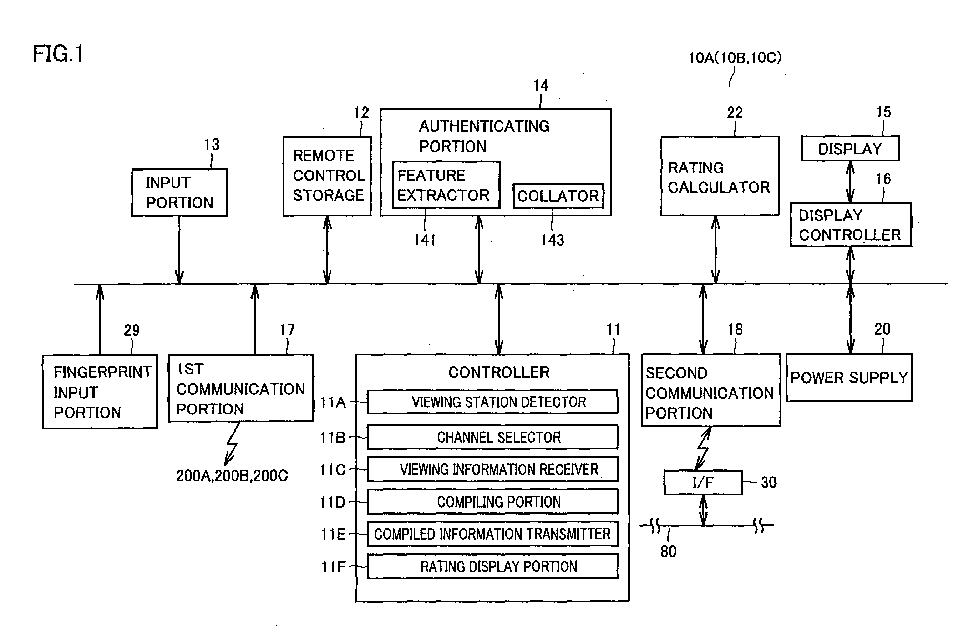

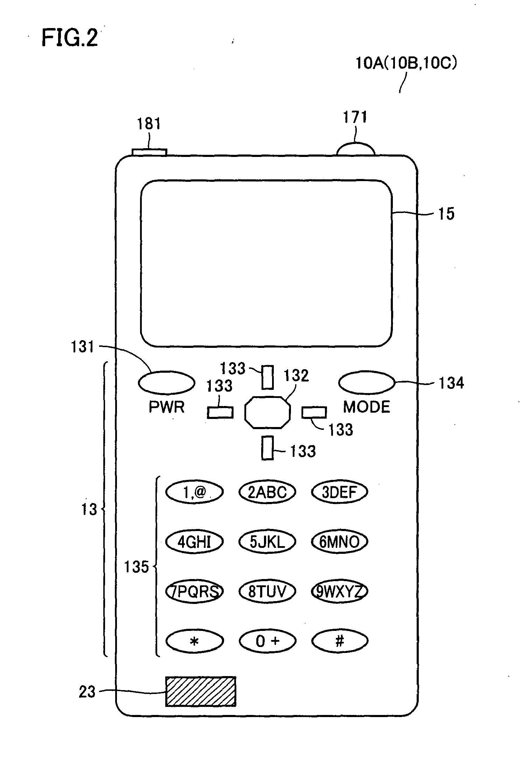

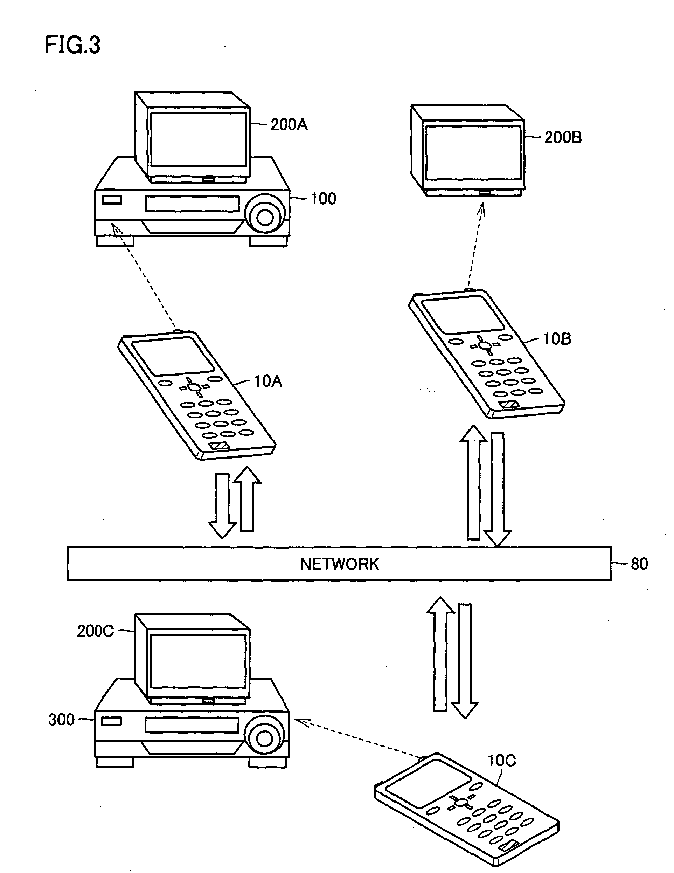

Fig. 1 illustrates a functional structure of a remote control device according to an embodiment of the invention. Fig. 2 shows an outer appearance of the remote control device. Fig. 3 schematically shows a structure of a system including the remote control devices correlated with controlled devices.

Referring to Fig. 3, the system includes a network 80 employing communications lines such as WiFi (registered trademark), Bluetooth, PLC (Power Line Communication), Ethernet (registered trademark) or the like, and also includes a plurality of remote control devices 10A, 10B and 10C connected to network 80. Remote control devices 10A, 10B and 10C have substantially the same function. Although three remote control devices are shown, it is merely required to connect a plurality of remote control devices to network 80. More preferably, the number of the remote control devices is determined to allow collection of a sample number of viewing information items from which appropriate ratings (i.e., appropriate TV rating) can be calculated.

Remote control device 10A remotely controls a DVD (Digital Versatile Disk) recorder 100 which is a control target device, and thereby DVD recorder 100 externally outputs and displays a program on a screen of a television set 200A for viewing. Remote control device 10B remotely controls a television set 200B to output a program on a screen of television set 200B for viewing. Remote control device 10C remotely controls a control target device which is an HDD (Hard Disk Device) recorder 300, and can output a record program on a screen of a television set 200C for viewing while performing the recording by HDD recorder 300. Each remote control device performs the remote control by transmitting an infrared control signal modulated for the control to the remote control target device, i.e., DVD recorder 100, television set 200B or HDD recorder 300 each provided with the TV tuner. For the sake of simplicity, it has been described that each remote control device controls one device with the television tuner. However, each remote control device may be configured to control remotely a plurality of devices. Since remote control devices 10A, 10B and 10C have substantially the same functional structure, these may be collectively referred to as the remote control device(s) or remote control device(s) 10A (10B and 10C).

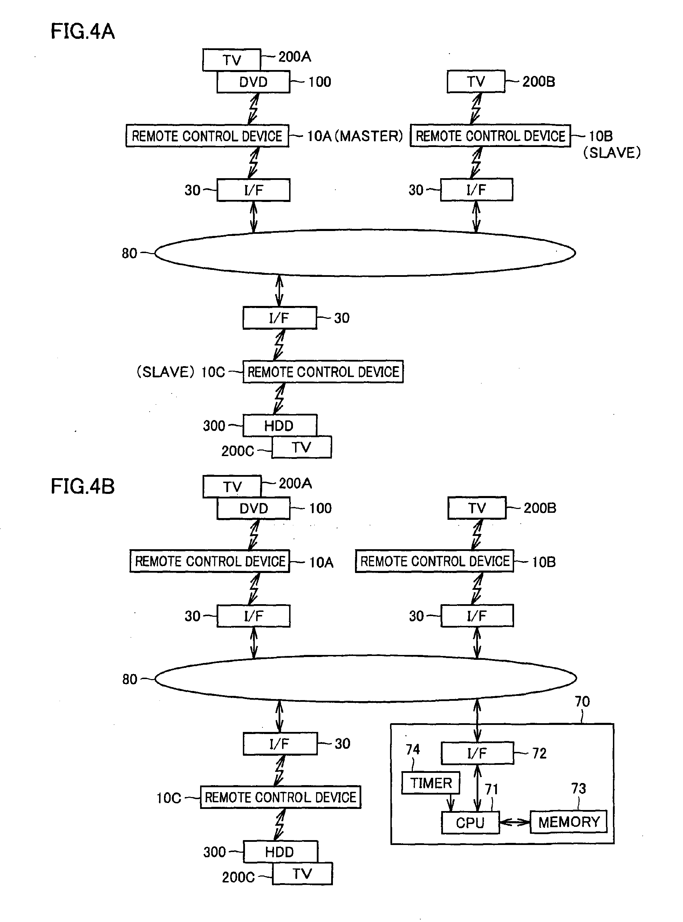

Fig. 4A schematically shows a system in Fig. 3. Referring to Fig. 4A, each of remote control devices 10A, 10B and 10C performs the communications via an interface (I/F) 30 arranged corresponding to it, using infrared signals. Each interface 30 is connected to network 80, and has a function of interconnecting network 80 and the remote control device. In this embodiment, it is assumed that remote control device 10A is a master remote control device, and remote control devices 10B and 10C are slave remote control devices. In the following description, the master remote control device may be simply referred to as the master, and the slave remote control device may be simply referred to as the slave.

Each remote control device has a remote control storage 12 (to be described later) storing information about the type (i.e., slave or master) thereof. A CPU (Central Processing Unit) 31 to be described later refers to remote control storage 12 to determine whether the remote control device operates as the master or the slave. Since the user can operate to write the desired information into remote control storage 12, the remote control device can be set to either the maser or the slave.

Fig. 4B shows a system different from that in Fig. 4A. The system in Fig. 4B differs from the system in Fig. 4A in that the system in Fig. 4B has a server computer 70 connected to network 80. In the system in Fig. 4B, therefore, remote control devices 10A, 10B and 10C are connected to network 80 as clients of server computer 70.

Server computer 70 has an interface (I/F) 72 for connecting server computer 70 and network 80, a CPU (Central Processing Unit) 71 for concentratedly controlling and monitoring server computer 70, a memory 73 for storing various data and programs, and a timer 74.

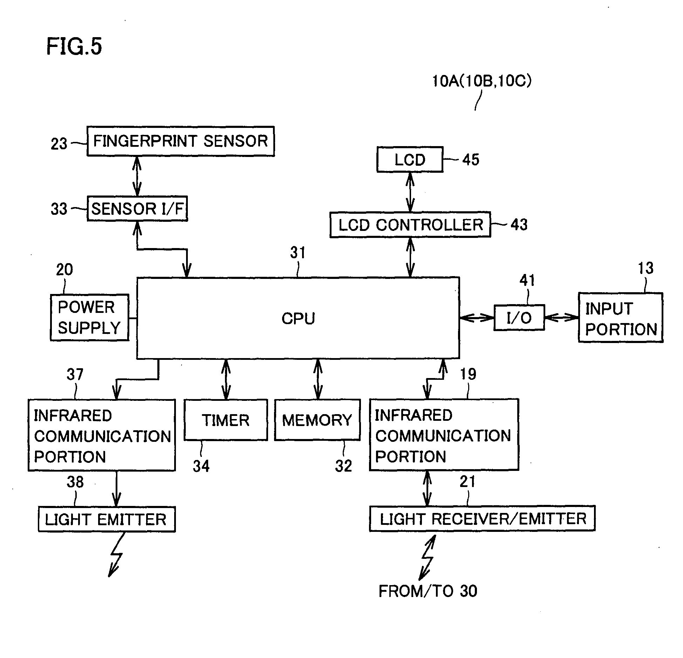

Fig. 5 shows a hardware structure of remote control device 10A (10B or 10C). Remote control device 10A (10B or 10C) includes a CPU 31, a memory 32 for storing various data and programs, a timer 34, an input portion 13 operated for externally entering various information items, an input/output (I/O) 41 for connecting input portion 13 and CPU 31, an LCD (Liquid Crystal Display) 45 for displaying various information items, and an LCD controller 43 for controlling LCD 45 based on the signal or data provided from CPU 31.

Remote control device 10A (10B or 10C) further includes a fingerprint sensor 23 for reading fingerprint information (fingerprint image) of the user carrying the remote control device in question, a sensor interface (I/F) 33 for controlling fingerprint sensor 23 based on instructions of CPU 31, a power supply 20 such as a battery for supplying a power for driving to various portions in the remote control device, a light emitter 38 for providing infrared signals, i.e., optical signals to the controlled device, an infrared communication portion 37 driving light emitter 38 and providing the infrared signals modulated according to the control signal provided from CPU 31, a light receiver/emitter 21 for receiving and transmitting the infrared signals (optical signals) from and to interface 30, and an infrared communication portion 19 controlling the operation of light receiver/emitter 21 under the control of CPU 31.

Referring to Fig. 1, remote control device 10A (10B or 10C) includes a controller 11 corresponding to CPU 31, remote control storage 12 corresponding to memory 32, input portion 13, an authenticating portion 14 formed of a program or a circuit, a display 15 corresponding to LCD 45 and a display controller 16 corresponding to LCD controller 43. Further, remote control device 10A (10B or 10C) includes a first communication portion 17 corresponding to infrared communication portion 37 and light emitter 38, a second communication portion 18 corresponding to infrared communication portion 19 and light receiver/emitter 21, power supply 20, a rating calculator 22 for calculating the rating based on collected viewing information, and a fingerprint input portion 29 corresponding to fingerprint sensor 23 and sensor interface 33.

Controller 11 includes a viewing station detector 11A detecting the viewing station that is the TV station currently tuned by the device controlled by the remote control device in question, and providing the viewing station information. Also, controller 11 includes a channel selector 11B that selects, for tuning by the device, a channel of the TV station of a high calculated rating. Further, controller 11 includes a viewing information receiver 11C for externally receiving the viewing information, a compiling portion 11D compiling the viewing station information, a compiled information transmitter 11E transmitting the compiled information and a rating display portion 11F.

Authenticating portion 14 includes a feature extractor 141 and a collator 143. Feature extractor 141 extracts feature data representing a feature quantity of the fingerprint according to predetermined steps from image data that is read from the fingerprint by fingerprint sensor 23 of fingerprint input portion 29, and provides the extracted feature data to collator 143. In this example, so-called minutiae (which are end points or branching points of fingerprint ridges) are extracted as the image feature quantity from the fingerprint image, but the feature quantity is not restricted to this.

Collator 143 collates the provided feature data with the feature data of the fingerprint of the authorized user that is registered for this remote control device, and outputs a result of the collation. Based on the output value of the collation result of collator 143, authenticating portion 14 determines whether the fingerprint read by the fingerprint input portion 29 is the fingerprint of the authorized user registered in remote control 10A (10B or 10C) in question, i.e., the proper registrant or not, and provides the result of this determination to controller 11.

Therefore, the remote control device may be configured to authenticate the operator's identification by authenticating portion 14 at the start of user's operation of the remote control device. Thereby, controller 11 can determine based on the result of the determination for such authentication whether the operation of the remote control device in question is to be permitted or not. For example, power supply 20 stops the supply of power to various portions when the above result represents that the user is not authorized. This can prevent such a situation that an unauthorized (i.e., unregistered) person operates the remote control device to manipulate intentionally the ratings described below.

Referring to Fig. 2, remote control device 10A (10B and 10C) is provided at a main surface of its casing with display 15, input portion 13 and a fingerprint reading surface of fingerprint sensor 23. On a side surface of the casing, there are arranged a light receiver/emitter 181 that is formed of photodiodes and light-emitting diodes corresponding to light receiver/emitter 21, and a light emitter 171 corresponding to light emitter 38 and formed of light-emitting diodes.

Input portion 13 has a power key 131 that is operated for controlling on/off of the supply of power to various portions by power supply 20, an enter key 132, keys 133 for moving a cursor or the like, a mode key 134 to be operated for selecting a mode and keys 135 for entering various kinds of information such as character information, numeric values and the like.

In this example, display 15 is independent of input portion 13. However, the device may be a so-called display-integrated touch panel in which display 15 and input portion 13 are integrally arranged.

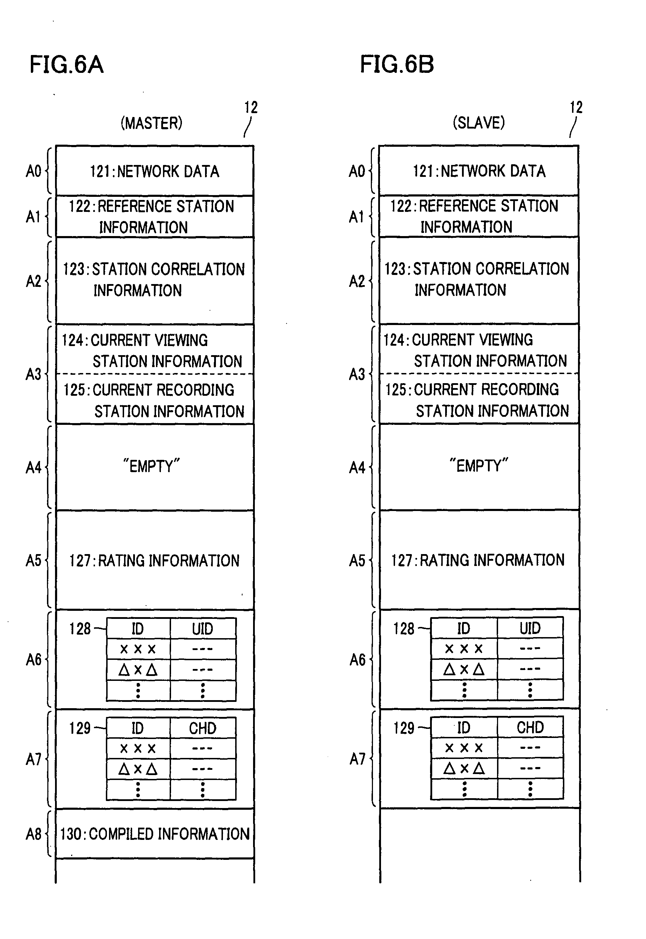

Figs. 6A and 6B illustrate examples of storage contents of the memory according to the embodiment of the invention. Both the master remote control device (e.g., remote control device 10A) in Fig. 6A and the slave remote control devices (remote control devices 10B and 10C) in Fig. 6B have storage regions A0 - A7 of the same structures in remote control storage 12. Further, master remote control device 10A has a storage region A8. Storage region A0 stores network data for uniquely identifying the network to which this remote control device belongs.

When CPU 31 receives the data via second communication portion 18, CPU 31 compares the network data included in the received data with network data 121 read from storage region A0. When CPU 31 determines from the comparison that these kinds of the network data match each other, it detects that the received data indicates the data transmitted from a device in the same network, and performs the processing with reference to the received data. When it is determined that mismatching occurs, the received data is ignored (abandoned).

Storage region A1 stores reference station information 122. When the remote control device has a function of successively selecting the TV stations in forward and reverse directions, reference station information 122 is referred to in the following manners. In one of the manners, a control signal is automatically transmitted to the controlled device, and thereby the channel for tuning by the device is once selected so that the device may receive the signal (broadcast signal) transmitted from the reference station indicated by the reference station information set (stored) in advance in storage region A1. In another manner, information about the current viewing station is entered into the remote control device when the user starts the operation of the remote control device, and this information is stored as reference station information 122 indicating the reference station. Thereafter, when the successive selection is executed with keys 133, controller 11 counts the successively selecting operations performed on input portion 13. Based on the count thus obtained and the information (channel number of the broadcasting station) indicated by reference station information 122, the broadcasting station of the program that is currently received (viewed) by the controlled device can be uniquely detected.

When the current viewing station is selected by directly entry (selection) in the controlled device such as television set 200B, this station may differ from the currently selected station in the remote control device. For eliminating such difference or a transmission error of the remote control signal, reference station information 122 is updated such that the reference station indicated by reference station information 122 always indicates the last station that was selected by the operation of the remote control device. The station that was selected for recording by the forward (or reverse) selection function can be specified in a similar manner.

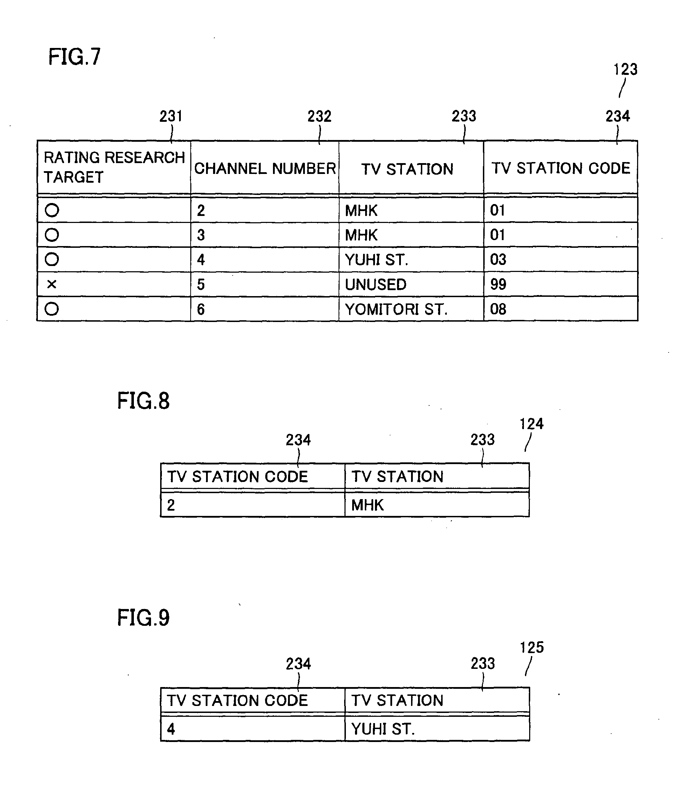

Storage region A2 stores station correlation information 123. Referring to Fig. 7, station correlation information 123 includes items of data 233 and TV station codes 234 corresponding to respective items of data 232 of the channels that can be selected by the corresponding device such as TV station 200B. Data 233 indicates the names of TV stations broadcasting the programs that can be viewed when device is tuned to the corresponding channels, respectively. Further, station correlation information 123 includes data 231 indicating whether each of the TV stations indicated by data 233 is a target of the rating research.

TV station codes 234 are common to all the devices and thus to the whole country, and are assigned uniquely to each TV station. Thus, different devices may employ different channel numbers for indicating the same TV station in many cases, and therefore TV station codes 234 are used as the information indicating the viewing station. When the user performs the channel selection, TV station code 234 is transmitted to the device.

In Fig. 7, since a channel of "5" in data 232 is not assigned to any TV station, the corresponding item of data 233 bears a title of "unused" station.

Remote control storage 12 stores the newest details of station correlation information 123 that are distributed from an external device or computer (not shown) via network 80. Therefore, the remote control device stores the newest station correlation information 123.

Storage region A3 stores current viewing station information 124 and current recording station information 125. Referring to Fig. 8, current viewing station information 124 includes TV station code 234 and TV station name data 233 corresponding to the TV station of the program that is being viewed on the screen of the controlled device. Referring to Fig. 9, current recording station information 125 includes TV station code 234 and TV station name data 233 corresponding to the TV station of the program that is being recorded via the controlled device.

Storage region A4 is a region used in a second embodiment to be described later, and is an empty region that is not used in the first embodiment. Storage region A5 stores calculated rating information 127.

Storage region A6 stores personal information 128. Personal information 128 includes an identifier ID (e.g., name) corresponding to each user using the remote control device in question as well as personal information (residence regions (Kanto, Kansai, Tohoku, Kyushu and Shikoku), generations, genders, hobbies and the like) UID of the user.

Storage region A7 stores feature information 129. Feature information 129 includes feature data CHD indicating identifier ID and a minutia of a fingerprint corresponding to each of the users that may operate the remote control device in question.

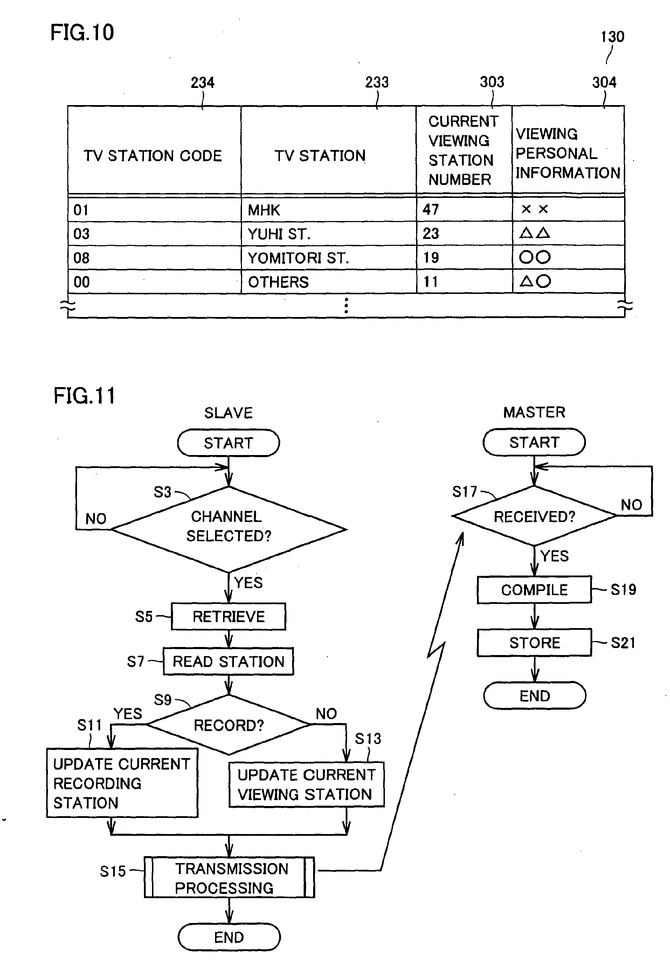

Storage region A8 of the master stores compiled information 130. Referring to Fig. 10, compiled information 130 represents a result of the collection of current viewing station information 124 and current recording station information 125 from each remote control device. In this example, all local TV stations in prefectures are assigned TV station code 234 of the same value of "00". Compiled information 130 includes TV station codes 234 as well as data 233 indicating the TV station names, data 303 of the number of current viewing stations and viewing personal information 304 that correspond to each TV station code 234.

The current viewing station number indicated by data 303 represents the number of remote control devices that selected the program of the corresponding TV station for viewing or recording. Viewing personal information 304 represents a compiled result of personal information UID of the respective users that operated the remote control devices to select the program of the corresponding TV station for viewing or recording.

Referring to the flowcharts of Figs. 11 to 13, description will now be given on the steps of compiling the viewing information in the system structure illustrated in Fig. 4A. Memory 32 of each remote control device stores in advance a program according to the flowcharts of Figs. 11 to 13, and CPU 31 reads and executes it.

### (Information Collection for Compiled Information)

Description will now be given on the steps of collecting the information for compiled information 130 by the master.

First, in the remote control device of the slave, CPU 31 determines whether the user operated input portion 13 for channel selection or not (step S3). More specifically, when the user operates one of numeric keys 135 representing the channel numbers, input portion 13 outputs a numeric code corresponding to the operated numeric key so that CPU 31 determines whether the channel selection is performed or not, based on whether CPU 31 receives the numeric code from input portion 13 or not.

When it is determined that the numeric key is operated (YES in step S3), viewing station detector 11A in controller 11 retrieves station correlation information 123 in storage region A2 of remote control storage 12 based on the numeric value indicated by the numeric code provided from input portion 13 (step S5). By this retrieval, controller 11 reads data 233 indicating the TV station name and TV station code 234 corresponding to data 232 of the channel number indicated by the numeric value in question (step S7).

First communication portion 17 is controlled using TV station code 234 thus read. First communication portion 17 transmits the control signal for selecting the channel of the TV station in question to the device. Based on the received control signal, the channel is selected in the device to receive the broadcast signal from the TV station corresponding to read TV station code 234, and the device receives the broadcast signal of the program.

Therefore, viewing station detector 11 A has the function of detecting the viewing station, i.e., the TV station which is currently selected by the device controlled by the remote control device in question, and providing the information of the viewing station such as data 233 indicating the TV station name and TV station code 234.

Then, CPU 31 determines based on the operation of mode key 134 whether the record mode is set at the time of the above channel selection or not (step S9). When it is determined that mode key 134 is operated to designate the record mode (YES in step S9), the information read in step S7 is stored as current recording station information 125 in storage region A3 (step S 11). When it is determined that the record mode is not designated (NO in step S9), the information read in step S7 is stored as current viewing station information 124 in storage region A3 (step S 13). When storage region A3 has already stored current viewing station information 124 and current recording station information 125, these items of information are overwritten and updated with the information items read in step S7.

At this time, the master remote control device executes the processing in steps S3 - S13 to update current viewing station information 124 or current recording station information 125 with the newest details.

Thereafter, CPU 31 of the slave remote control device reads current viewing station information 124 and current recording station information 125 thus updated from storage region A3, and performs the processing for transmitting the read information to the master remote control device (step S15).

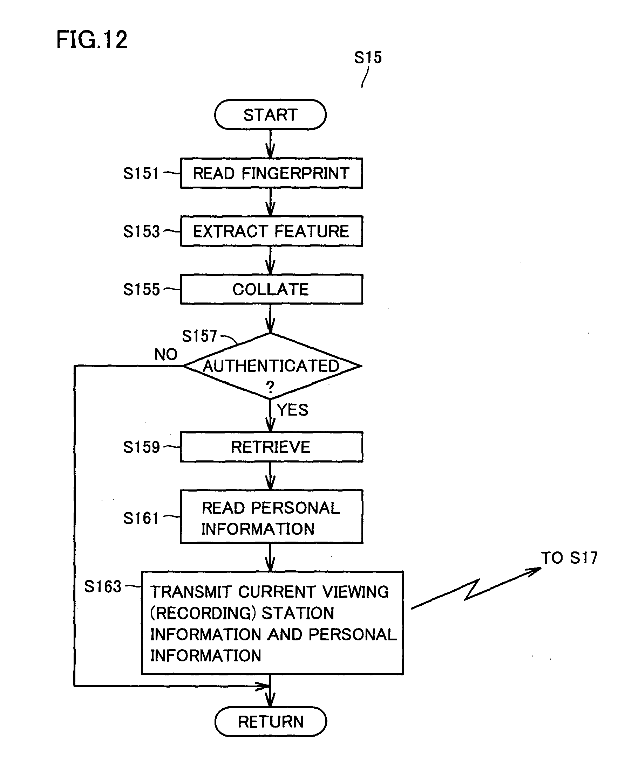

The processing for transmission in step S 15 will now be described with reference to Fig. 12. It is assumed that the operator of the slave remote control device has already placed his/her finger on fingerprint sensor 23 for fingerprint reading.

First, CPU 31 receives the fingerprint image data from fingerprint sensor 23 that read the fingerprint (step S 151), and provides it to authenticating portion 14. Feature extractor 141 of authenticating portion 14 extracts the feature data from the fingerprint image thus provided (step S153), and provides the extracted feature data to collator 143 to perform the collating processing (step S155).

In the collating processing, collator 143 collates the provided feature data with each item of feature data CHD of feature information 129 in storage region A7 of remote control storage 12. When it is determined from the collation that storage region A7 has stored feature data CHD matching the provided feature data, user identifier ID corresponding to this feature data CHD is read from feature information 129. When it is determined that feature data CHD matching the provided feature data is not stored, user identifier ID is not read out.

Authenticating portion 14 determines whether the personal identification of the user can be authenticated or not, based on whether collator 143 reads user's identifier ID or not (step S157).

When user's identifier ID is read and it is detected that the identification can be authenticated (YES in step S157), the process proceeds to step S 159 to be described later. When user's identifier ID is not read and it is detected that the identification cannot be authenticated (NO in step S 157), the processing in step S15 in Fig. 12 ends, and the process returns to Fig. 11.

Therefore, only the authorized users having feature data CHD registered in the remote control devices are handled as targets, and the viewing information (current viewing station information 124 or current recording station information 125) thereof is transmitted to the master.

In step S 159, slave CPU 31 retrieves personal information 128 in storage region A6 based on user's identifier ID provided from collator 143, and reads corresponding personal information UID (step S161).

Thereafter, CPU 31 transmits the current viewing information (current viewing station information 124 or current recording station information 125) obtained in step S7 as well as personal information UID read in step S161 via network 80 and second communication portion 18 to the master remote control device (step S163). Thereafter, the process returns to the steps in Fig. 11.

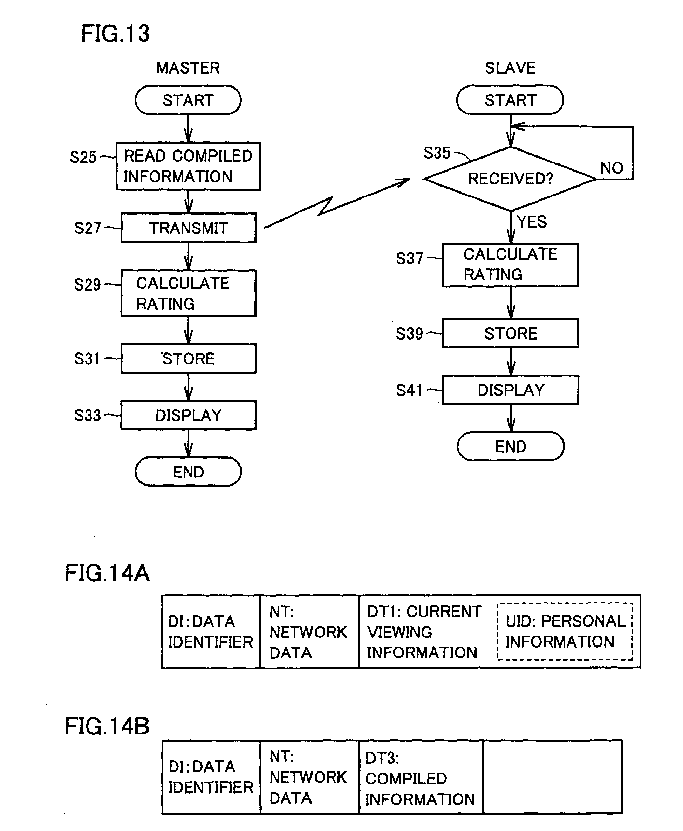

Fig. 14A illustrates a format of the data transmitted in step S163. Referring to Fig. 14A, the data thus transmitted includes a data identifier DI indicating that the transmission of the current viewing information is performed, network data 121 read from storage region A0 and a current viewing information DT1 having personal information UID read in step S161. Other slave remote control devices also receive the data thus transmitted, but these slave remote control devices detect that data identifier DI indicates the transmission of the current viewing information, and thus determine that these slave control devices are not the destination. Therefore, these slave remote control devices ignore and abandon the received data.

When viewing information receiver 11C of the master remote control device receives the data in Fig. 14A via second communication portion 18, it determines, based on data identifier DI and network data NT of the received data, that the data is transmitted to the master remote control device from the device belonging to the same group in the network, and therefore determines that the data is the processing target data (YES step S 17).

Compiling portion 11D of the master updates compiled information 130 with the received data (step S19). More specifically, compiling portion 11D reads compiled information 130 from remote control storage 12, and updates read compiled information 130 with the received data. Thus, in compiled information 130 in Fig. 10, received personal information UID is added for registration to viewing personal information 304 corresponding to data 233 and TV station code 234 indicated by received current viewing information DT1, and the count of corresponding current viewing stations 303 is incremented by one.

When data 233 and TV station code 234 indicated by received current viewing information DT1 are not registered in compiled information 130, this current viewing information DT1 is newly registered as data 233 and TV station code 234, received personal information UID is registered in corresponding viewing personal information 304 and corresponding current viewing station number 303 is set to a value of "1".

Since the master performs the processing in steps S3 - S 13, compiled information 130 further includes current viewing station information 124 and current viewing station information 124 and current recording station information 125 in storage region A3 of the master.

After compiled information 130 is updated in the above manner, storage region A8 stores this compiled information 130 by overwriting (step S21). Thereby, compiled information 130 stored in the master can keep the newest viewing information (number of viewing operations) for each TV station on network 80.

In Fig. 12, the processing for fingerprint reading, feature extraction and collation (steps S 151, S153 and S 155) is performed at the stage of the transmission program. However, this processing may be performed in advance. For example, the processing may be performed when the channel operation is performed (YES in step S3).

### (Calculation of Ratings)

Referring to a flowchart of Fig. 13, description will now be given on the steps of calculating the rating in each of the slaves based on compiled information 130 of the master.

First, compiled information transmitter 11E of the master remote control device detects the timing for delivering or distributing compiled information 130 to each slave, using timer 34. In this example, compiled information 130 is read from storage region A8 of remote control storage 12 at predetermined intervals (i.e., periodically) based on the measured time of timer 34 (step S25), and compiled information 130 thus read is transmitted to network 80 via second communication portion 18 (step S27). More specifically, the master delivers compiled information 130 that has been collected before the end of the predetermined period. After the delivery, the master clears compiled information 130 in storage region A8, and starts collection of the current viewing information during a next predetermined period.

Fig. 14B illustrates a format of the data transmitted from the master in the above operation. Referring to Fig. 14B, the transmitted data includes data identifier DI indicating that this transmission is delivery of compiled information 130, network data NT indicating network data 121 read from storage region A0 of the master, and compiled information DT3 indicating compiled information 130 read from storage region A8.

Thereafter, CPU 31 of the master provides compiled information 130 read in step S25 to rating calculator 22, and rating calculator 22 calculates the ratings based on compiled information 130 thus provided (step S29). Rating calculator 22 calculates the rating for each TV station code 234 indicating the TV station with reference to station correlation information 123 read from storage region A1 of remote control storage 12, and provides the calculated result to controller 11.

Controller 11 receives the calculation result, and stores the received calculation result, as rating information 127, in storage region A5 of remote control storage 12 (step S31). Rating display portion 11F drives display controller 16 to display an image of the received calculation result, and display 15 displays the calculated ratings on the screen (step S33). Likewise, the slave performs the calculation, storage and display of the ratings based on received compiled information 130 in steps S37, S39 and S41.

The steps of calculating the ratings are as follows. Processing is performed to obtain a sample number N equal to a total number of the current viewing stations indicated by data 303 corresponding to all TV station codes 234. The rating (%) of each TV station code 234 is calculated from ((the number of the current viewing stations indicated by data 303 corresponding to TV station code 234 in question)/(sample number N) x 100). The information of TV station codes 234 of unused TV stations is omitted from sample number N, but sample number N includes the information of TV station codes 234 of the TV stations other than the omitted TV stations. Referring to Fig. 10, when TV station code 234 is "01", the rating is calculated from ((the number of current viewing stations of TV station code "01")/(sample number N) x 100) = (47/100) x 100 = 47 (%).

Rating calculator 22 is configured to calculate the rating for every TV station code. However, station correlation information 123 in storage region A2 may be retrieved, and the rating may be calculated through the foregoing steps only for television codes 233 that are indicated as the rating research targets by corresponding data 231.

The ratings calculated for the TV stations through the above steps are stored in storage region A5 as rating information 127 in such a fashion that the ratings are correlated to the television codes.

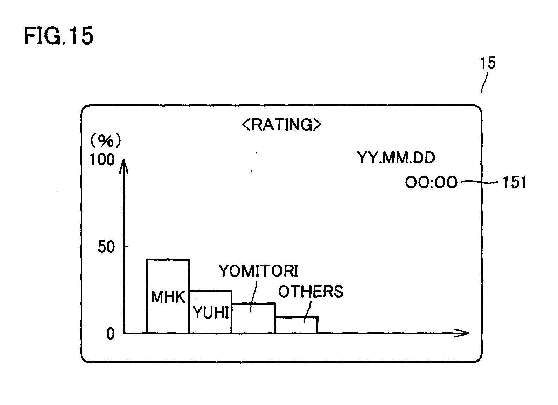

Fig. 15 shows an example of display in step S33. In Fig. 15, for easy understanding of the ratings by the user, controller 11 retrieves compiled information 130, reads the name of the TV station indicated by data 233 corresponding to TV station code 234 for which the rating is calculated, and displays the rating together with the read name of the TV station related thereto. On a screen shown in Fig. 15, a time 151 is displayed together with the ratings. Time 151 represents the current time provided from timer 34. In the display form shown in Fig. 15, a bar graph is displayed for approximately representing the ratings. However, the values of ratings may be displayed together with the bar graph, or only the values of ratings may be displayed. In still another manner, desired display forms may be selected according to an instruction provided via input portion 13.

In the above example, the delivery of compiled information 130 from the master to the slave as well as the calculation of the ratings are performed periodically. However, the system may be configured as follows. When the master receives a user's request from the slave, the master delivers compiled information 130 to the slave of the requester independently of this periodic delivery, and this slave calculates the ratings.

In this example, the rating may be calculated from each slave remote control device. However, such a manner may be employed that the master remote control device calculates the ratings, and delivers the result of the calculation to the slave.

The following manner may be employed. When channel selector 11B in controller 11 detects the program (TV station) exhibiting the calculated rating larger than a predetermined value, the corresponding device (e.g., television set 200B) is tuned to the channel of the TV station that is broadcasting the TV program of the high rating. More specifically, when channel selector 11B detects the program (TV station) of the calculated rating higher than the predetermined value, it displays on the screen in Fig. 15 to the effect. For example, controller 11 instructs display controller 16 to display, e.g., a message "Program of higher rating is detected". When the user viewing this message operates the enter key 132 in input portion 13, input portion 13 provides a code corresponding to the user's operation to channel selector 11B. Thereby, channel selector 11B transmits the TV station code of the TV station in question via first communication portion 17. The corresponding device (e.g., television set 200B) receives the transmitted signal, and operates to select the channel of the TV station code indicated by the signal received from the remote control device.

Thereby, the user can select the program of the high rating without giving attention to the TV stations and operating the remote control.

In this example, the ratings related to the actual viewing are not discriminated from the ratings related to the recording. However, these two kinds of ratings related to the viewing and recording may be discriminated from each other.

### (Second Embodiment)

In the first embodiment, the target TV station is designated when calculating the rating. In the second embodiment, however, the rating is calculated with reference to personal information of the viewers.

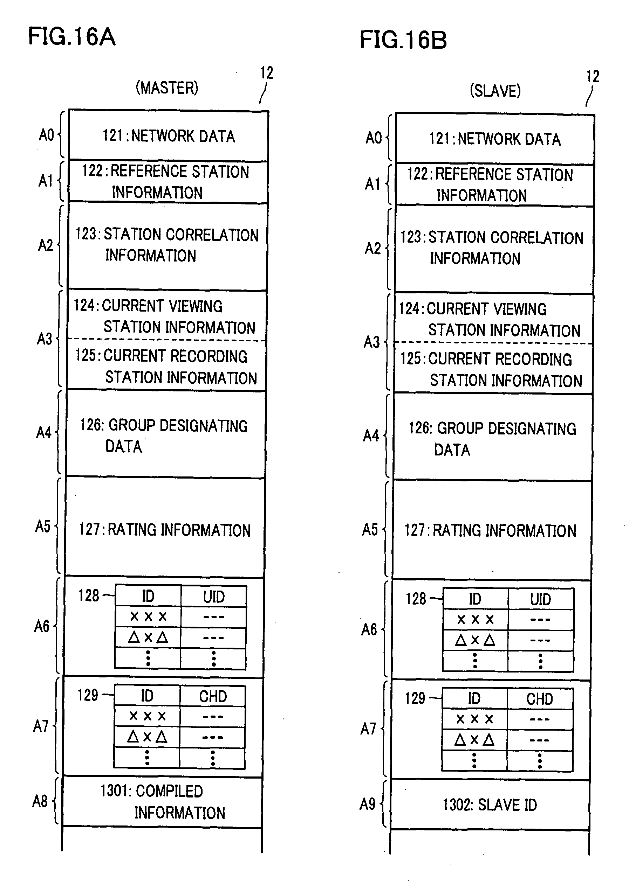

Fig. 16 illustrates an example of contents of remote control storage 12 in the second embodiment. This example differs from that in Fig. 6 in that storage region A4 additionally stores group designating data 126, storage region A8 stores compiled information 1301 compiled corresponding to each kind of personal information instead of compiled information 130, and a slave region A9 of the slave remote control device stores a slave ID 1302 for identifying the this slave.

Group designating data 126 is employed for designating the rating calculation target based on the personal information, and indicates, e.g., generations, genders and residence regions.

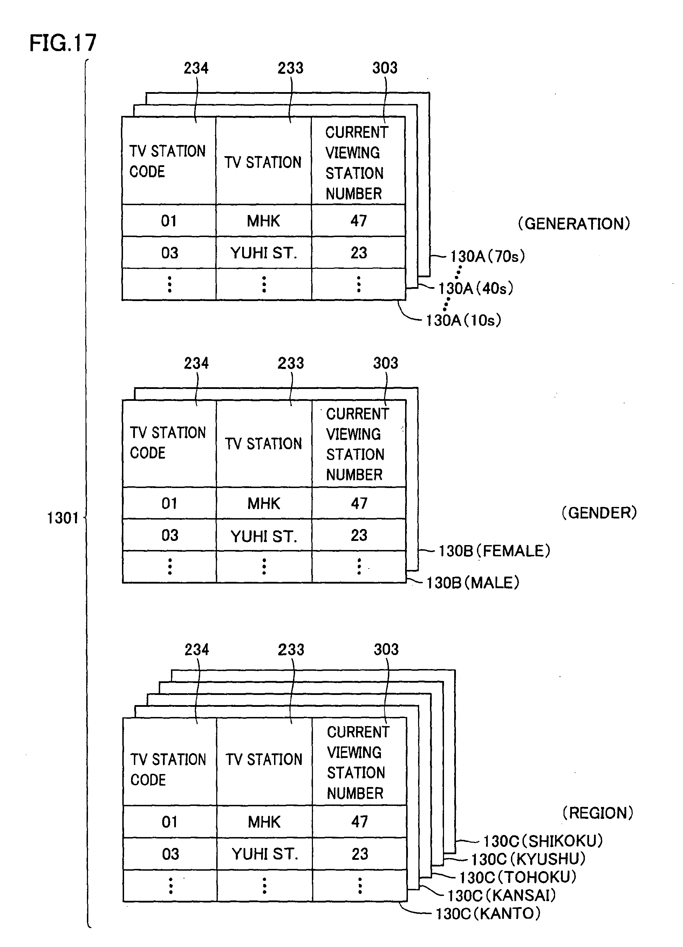

Fig. 17 shows an example of compiled information 1301 of the second embodiment. Referring to Fig. 17, compiled information 1301 includes generation-specific compiled information 130A prepared by summarizing the viewing information by generation indicated by the personal information of viewers, gender-specific compiled information 130B summarized by gender, and region-specific compiled information 130C summarized by region. The classification of the compiled information based on the personal information is not restricted to the above.

When the master remote control device receives the current viewing information included in the transmitted data in Fig. 14A from each slave according to the steps illustrated in Fig. 11, current viewing information DT1 thus received is updated by changing the values of current viewing station number 303 in compiled information 130A, 130B and 130C based on personal information UID of the received data. Thereby, the current viewing information collected from the slaves can be compiled into compiled information 130A, 130B and 130C by grouping it according to the personal information of the viewers.

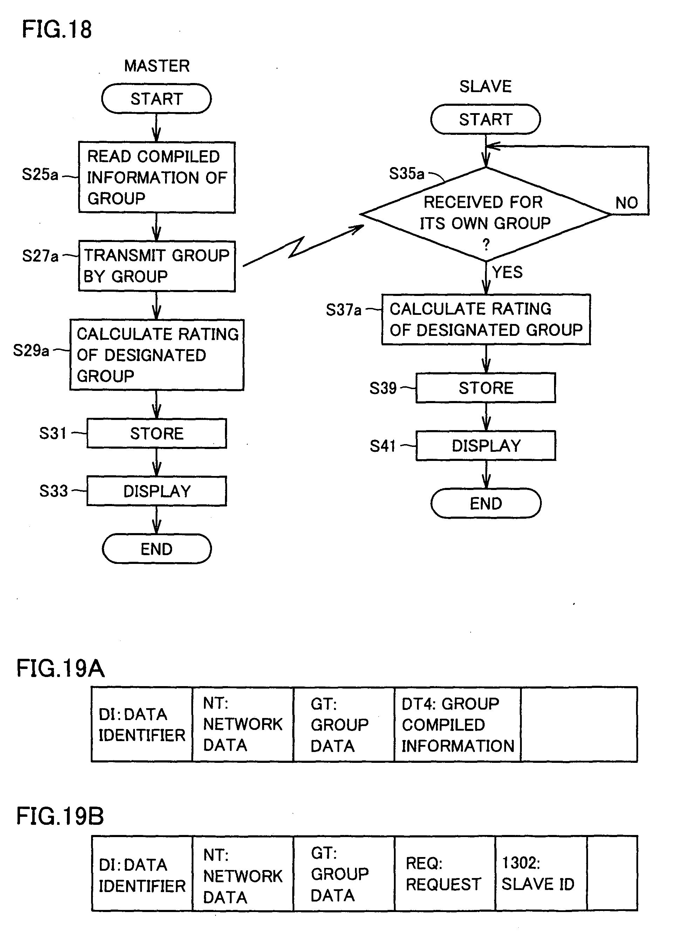

A flowchart of Fig. 18 illustrates the steps of calculating the ratings in the second embodiment. The steps in Fig. 18 differ from the steps in Fig. 13 in that steps S25, S27, S29, S35 and S37 in Fig. 13 are replaced with steps S25a, S27a, S29a, S35a and S37a, respectively. Since other processing is the same as that already described with reference to Fig. 13, description thereof is not repeated.

First, the master reads compiled information 130A, 130B and 130C prepared by classifying compiled information 1301 in storage region A8 according to the personal information, and transmits compiled information 130A, 130B and 130C according to the data format in Fig. 19A (steps S25a and 27a). The transmission data in Fig. 19A includes data identifier DI indicating that the compiled information is distributed or delivered, network data NT, compiled information DT4 (representing compiled information 130A, 130B or 130C) in the grouped form, and group data GT specifying the respective groups (generation, gender and region) to which the compiled information belongs. Therefore, in the operation of transmitting compiled information 130A, 130B and 130C, the data in Fig. 19A for compiled information 130A, the data in Fig. 19A for compiled information 130B and the data in Fig. 19A for compiled information 130C are transmitted.

The slave remote control device receives the data of the compiled information from the master via second communication portion 18 in step S27a. In this operation, the received data is analyzed, and it is determined whether group data GT matches group designating data 126 read from remote control storage 12 of this slave or not, i.e., whether group data GT is addressed to this slave or not. When mismatching occurs, the data in question is ignored (abandoned). When matching occurs (YES in step S35a), it is determined that the data is addressed to this slave.

Based on received group compiled information DT4, the rating is calculated through the steps similar to those in the first embodiment (step S37a), and the result of the calculation is stored and displayed (steps S39 and S41).

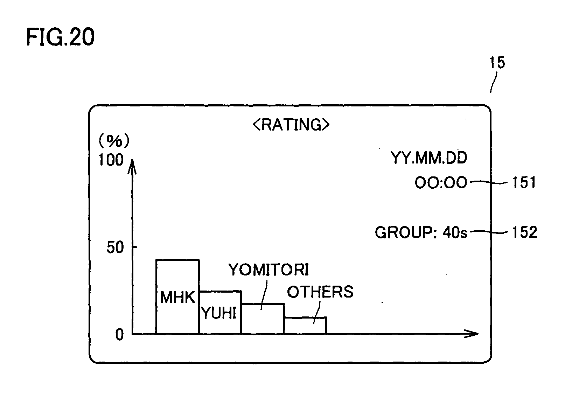

Fig. 20 shows an example of display in step S41. In Fig. 20, data 152 specifying the target group of the calculated rating is displayed in addition to the displayed contents in Fig. 15.

These steps in the slave are executed similarly in the master of the sender (steps S29a, S31 and S33).

The user can operate input portion 13 to change group designating data 126 in storage region A4 in a desired manner. Therefore, the user can transmit only the compiled information of the intended group, and can display the ratings calculated therefrom.

In this example, the master periodically transmits the compiled information of each group to network 80, and thereby each slave obtains the compiled information. However, when the slave makes a request, the master searches for and reads out the compiled information of the requested group from storage region A8 for transmitting it to the slave. Fig. 19B illustrates the format of the data requested in this case.

The data in Fig. 19B includes data identifier DI indicating that this data is data requesting transmission of the compiled information, network data NT, group data GT indicating group designating data 126 of the slave, a request REQ and slave ID 1302 read from storage region A9. Although the other slaves receive this data for request, these slaves ignore (abandon) the received data when these slaves detect that data identifier DI indicates the request for the compiled information. In response to the detection of the fact that data identifier ID in question indicates the request for the compiled information, the master reads the compiled information of the group indicated by group data GT in the received data from storage region A8, and transmits it together with received slave ID 1302.

Although other slaves receive the above data, these slaves detect that the added destination designating data (slave ID 1302) does not match their own slave IDs 1302, and determine that the data is not addressed to them so that these slaves ignore the received data. The slave of the requester determines that the received data is addressed to itself. Thereby, this slave accepts the compiled data of the received data, and performs the calculation, storage and display of the ratings.

### (Third Embodiment)

In the first and second embodiments, one of the remote control devices operates as the master. As shown in Fig. 4B, however, server computer 70 may be connected to network 80, and may be configured to perform the functions of the master already described.

### (Fourth Embodiment)

The first and second embodiments employ the fingerprint authentication for authenticating the personal identification of the user of the remote control device. Instead of this or together with this, face authentication, iris authentication or bloodstream (vein) authentication may be used.

### (Fifth Embodiment)

The slave may be configured to add a weight to the current viewing information to be transmitted to the master or server computer 70. For example, the user (viewer) selects the level of weight from among five levels only for the degree of amusement of the program that is currently viewed, and enters the weight at the selected level through input portion 13 for transmitting it together with the current viewing information. Thereby, the quality of viewing can be provided together with the rating. The quality of viewing can be obtained for each TV station by calculating ((sum of weights)/(sample number N)) when the rating is calculated, and this quality is displayed together with the rating.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A remote control system, comprising:
a plurality of remote controllers (10A, 10B, 10C) transmitting a control signal to a device internally provided with a television tuner and thereby to control operations of said device including selection of a TV station for program reception, wherein
each of said plurality of remote controllers includes:
a viewing station detector (11A) detecting a viewing station being the TV station currently selected by said device controlled by said remote controller, and providing viewing station information,
a display, and
a rating display portion (11F) displaying, on said display, a rating of each of said TV stations calculated based on compiled information prepared by compiling said viewing station information; and
the predetermined remote controller among said plurality of remote controllers further includes:
a viewing information receiver (11C, 18) receiving from the different remote controller said viewing station information provided from said viewing station detector of said different remote controller, and
a compiling portion (11D) producing said compiled information by compiling, for each of said TV stations, said viewing station information received by said viewing information receiver and said viewing station information provided from said viewing station detector of said predetermined remote controller.

2. The remote control system according to claim 1, wherein
said different remote controller further includes a first calculator (22) receiving said compiled information transmitted from said predetermined remote controller and calculating the rating for each of said TV stations based on said received compiled information, and displays the rating of each of said TV stations calculated by said first calculator on said display by said rating display portion.

3. The remote control system according to claim 1, wherein
said predetermined remote controller transmits said compiled information produced by said compiling portion to said different remote controller of a requester in response to reception of a request from said different remote controller of the requester.

4. The remote control system according to claim 1, wherein
said predetermined remote controller further includes a compiled information transmitter (11E) transmitting said compiled information produced by said compiling portion to said different remote controller at predetermined time intervals, and
said compiling portion starts new compiling of said viewing station information upon every start of said predetermined time interval.

5. The remote control system according to claim 1, wherein
said rating is calculated for a preindicated TV station.

6. The remote control system according to claim 5, wherein
said viewing station information includes personal information of a viewer operating said remote controller,
said compiling portion produces the compiled information compiled corresponding to each of said TV stations for each of groups classified based on said personal information, and
said rating is calculated based on said compiled information of said group of a preindicated type.

7. The remote control system according to claim 1, wherein
said viewing station information includes personal information of a viewer operating said remote controller, and
said compiling portion produces the compiled information compiled corresponding to each of said TV stations for each of groups classified based on said personal information.

8. The remote control system according to claim 1, wherein
said device has a record function of recording a program broadcasted by said currently selected TV station, and
when said program is being recorded by said record function, said viewing station detected by said viewing station detector is said TV station broadcasting the recording program.

9. The remote control system according to claim 1, wherein
each of said plurality of remote controllers further includes an authenticating portion (14) authenticating a personal identification of an operator and determining based on a result of the authentication whether an operation of said remote controller in question is to be allowed or not.

10. The remote control system according to claim 9, wherein
said different remote controller transmits said viewing station information to said predetermined remote controller when said authenticating portion authenticates the personal identification of said operator.

11. The remote control system according to claim 1, wherein
each of said plurality of remote controllers further includes a selector transmitting an instruction for said selection to said device to receive the broadcast signal of said TV station achieving a calculated rating larger than a predetermined value.

12. The remote control system according to claim 2, wherein
said predetermined remote controller further includes a compiled information
transmitter transmitting said compiled information produced by said compiling portion to said different remote controller at predetermined time intervals, and
said compiling portion starts new compiling of said viewing station information upon every start of said predetermined time interval.

13. The remote control system according to claim 12, wherein
said predetermined remote controller transmits said compiled information produced by said compiling portion to said different remote controller of a requester in response to reception of a request from said different remote controller of the requester.

14. The remote control system according to claim 13, wherein
said rating is calculated for a preindicated TV station.

15. The remote control system according to claim 14, wherein
said viewing station information includes personal information of a viewer operating said remote controller, and
said compiling portion produces the compiled information compiled corresponding to each of said TV stations for each of groups classified based on said personal information.

16. The remote control system according to claim 15, wherein
said rating is calculated based on said compiled information of said group of a preindicated type.

17. The remote control system according to claim 16, wherein
said device has a record function of recording a program broadcasted by said currently selected TV station, and
when said program is being recorded by said record function, said viewing station detected by said viewing station detector is said TV station broadcasting the recording program.

18. The remote control system according to claim 17, wherein
each of said plurality of remote controllers further includes an authenticating portion authenticating a personal identification of an operator and determining based on a result of the authentication whether an operation of said remote controller in question is to be allowed or not.

19. The remote control system according to claim 18, wherein
said different remote controller transmits said viewing station information to said predetermined remote controller when said authenticating portion authenticates the personal identification of said operator.

20. The remote control system according to claim 19, wherein
each of said plurality of remote controllers further includes a selector transmitting an instruction for said selection to said device to receive the broadcast signal of said TV station achieving a calculated rating larger than a predetermined value.

21. A remote controller configured to transmit a control signal to a device internally provided with a television tuner and thereby to control operations of said device including selection of a TV station for program reception, and comprising:
a viewing station detector (11A) detecting a viewing station being the TV station currently selected by said device, and providing viewing station information;
a display;
a compiling portion (11D) producing compiled information by compiling, for each of said TV stations, said viewing station information provided from said viewing station detector and said viewing station information received from a different remote controller;
a calculator (22) calculating a rating for each of said TV stations based on said compiled information; and
a rating display portion (11F) displaying, on said display, the rating calculated by said calculator.

22. The remote controller according to claim 21, wherein
said rating is calculated for a preindicated TV station.

23. The remote controller according to claim 21, wherein
said viewing station information includes personal information of a viewer operating said remote controller, and
said compiling portion produces the compiled information compiled corresponding to each of said TV stations for each of groups classified based on said personal information.

24. The remote controller according to claim 23, wherein
said rating is calculated based on said compiled information of said group of a preindicated type.

25. The remote controller according to claim 21, wherein
said device has a record function of recording a program broadcasted by said currently selected TV station, and
when said program is being recorded by said record function, said viewing station detected by said viewing station detector is said TV station broadcasting the recording program.

26. The remote controller according to claim 21, wherein
said remote controller further includes an authenticating portion (14)
authenticating a personal identification of an operator and determining based on a result of the authentication whether an operation of said remote controller in question is to be allowed or not.

27. The remote controller according to claim 21, wherein
said remote controller further includes a selector transmitting an instruction for said selection to said device to receive the broadcast signal of said TV station achieving a calculated rating larger than a predetermined value.

28. The remote controller according to claim 22, wherein
said viewing station information includes personal information of a viewer operating said remote controller, and
said compiling portion produces the compiled information compiled corresponding to each of said TV stations for each of groups classified based on said personal information.

29. The remote controller according to claim 28, wherein
said rating is calculated based on said compiled information of said group of a preindicated type.

30. The remote controller according to claim 29, wherein
said device has a record function of recording a program broadcasted by said currently selected TV station, and
when said program is being recorded by said record function, said viewing station detected by said viewing station detector is said TV station broadcasting the recording program.

31. The remote controller according to claim 30, wherein
said remote controller further includes an authenticating portion authenticating a personal identification of an operator and determining based on a result of the authentication whether an operation of said remote controller in question is to be allowed or not.

32. The remote controller according to claim 31, wherein
said remote controller further includes a selector transmitting an instruction for said selection to said device to receive the broadcast signal of said TV station achieving a calculated rating larger than a predetermined value.
